# EUROPÄISCHE PATENTSCHRIFT

(11) **EP 2 855 943 B1**
(45) Veröffentlichungstag und Bekanntmachung des Hinweises auf die Patenterteilung: **18.10.2017**
(21) Anmeldenummer: 13722737.7
(22) Anmeldetag: 08.05.2013
(51) Int. Cl.: F15B 7/08, F16D 25/08, F16D 48/02

(54) **GEBERZYLINDER**
MASTER CYLINDER
MAÎTRE CYLINDRE

(30) Priorität: 25.05.2012 DE 102012208883; 26.07.2012 DE 102012213145
(43) Veröffentlichungstag der Anmeldung: 08.04.2015
(73) Patentinhaber: Schaeffler Technologies AG & Co. KG, 91074 Herzogenaurach (DE)
(72) Erfinder: ORTMANN, Simon, 77866 Rheinau-Linx (DE); WAGNER, Philippe, F-45000 Orléans (FR); OSTER, Julien, F-67480 Neuhaeusel (FR)
(86) Internationale Anmeldenummer: PCT/EP2013/059592
(87) Internationale Veröffentlichungsnummer: WO 2013/174654

(56) Entgegenhaltungen:
- EP-A1- 0 952 366
- EP-A2- 1 433 971
- US-A- 3 635 028
- US-A- 3 802 199

## Beschreibung

Die Erfindung bezieht sich auf einen Geberzylinder für ein hydraulisches System, insbesondere in Kupplungsausrücksystem, mit den Merkmalen des Oberbegriffes des Anspruchs 1.

Geberzylinder für hydraulische Systeme sind in einer Vielzahl von Ausführungsformen im Stand der Technik bekannt. Üblicherweise weisen derartige Geberzylinder ein Gehäuse mit einem Anschluss für eine Nachlaufleitung, einen Kolben, der im Gehäuse axial verschieblich gelagert ist und eine Kolbendichtung aufweist, die einen Druckraum gegrenzt und eine zweite Dichtung, die einen Nachlauf begrenzt, auf. Am Kolben befindet sich am Anschluss für eine Leitung eines hydraulischen Systems, in dem mittels des Geberkolbens ein hydraulischer Druck erzeugt werden kann. Da der Geberzylinder üblicherweise über ein Betätigungspedal betätigt wird, ist der im System maximal auftretende Druck direkt proportional zur maximalen Kraft, die der Benutzer auf das Betätigungspedal aufbringen kann. Diese Maximalkraft ist zum einen abhängig von der tatsächlich vorhandenen Kraft, die der Benutzer rein körperlich auf das Betätigungspedal aufbringen kann und zum anderen von der Reaktionskraft, die das System der Betätigungskraft des Benutzers entgegensetzt. Je nach Betriebszustand ist es dabei möglich, dass insbesondere bei Missbrauchssituationen im System sehr hohe Drücke auftreten können, die zu einer Beschädigung des Systems führen können.

Die US 3,802,199 A offenbart einen Geberzylinder gemäß dem Oberbegriff des Patentanspruchs 1.

Es stellt sich die Aufgabe, einen Geberzylinder zur Verfügung zu stellen, mit dem auch in außergewöhnlichen Betriebszuständen eine Beschädigung des Systems sicher vermieden werden kann. Die Lösung dieser Aufgabe gelingt mit einem Geberzylinder nach Anspruch 1. Vorteilhafte Weiterbildungen ergeben sich aus den Unteransprüchen.

Ein Geberzylinder gemäß der vorliegenden Erfindung weist ein Gehäuse mit einem Anschluss für eine Nachlaufleitung auf, einen Kolben, der im axial verschieblichen Gehäuse gelagert ist und mittels einer ersten Kolbendichtung einen Druckraum begrenzt, und einer zweiten Dichtung, die am Gehäuse oder am Kolben auf der vom Druckraum abgewandten Seite angeordnet ist und einen Nachlaufraum gegrenzt. Zwischen dem Druckraum und dem Nachlaufraum ist ein Überlastungsventill angeordnet, das bei Überschreiten eines vorbestimmten Drucks eine Fluidverbindung zwischen dem Druckraum und dem Nachlaufraum öffnet. Weiterhin weist das Überlastventil ein Dichtelement auf, das mittels einer Vorspannkraft gegen einen Anschlag oder eine Dichtfläche gepresst wird. Der Kolben ist aus einem Kolbenkörper und einem Einpressteil gebildet. Das Dichtelement weist zumindest in Teilbereichen eine Kreiszylinderform auf und ist in einer kreiszylindrischen Bohrung im Kolben oder im Einpressteil so geführt, dass ein Spalt zwischen dem Außenumfang des Dichtelements und der Innenseite der Bohrung vorhanden ist. Weiterhin ist ein Dichtring in dem Spalt zwischen dem Dichtelement und der Bohrung angeordnet, wobei bei einer Bewegung des Dichtelements gegen die Vorspannkraft das Dichtelement aus dem Dichtring oder das Dichtelement mit dem Dichtring aus der Bohrung geführt wird, bis eine Fluidverbindung zwischen dem Druckraum und dem Nachlaufraum entsteht.

Es ist dabei möglich, das Überlastventil in den Kolben des Geberzylinders zu integrieren. Dazu kann der bei einem Geberzylinder nach dem Stand der Technik meist vorhandene Dichtringträger vorteilhaft als Gehäuse oder Gehäuseteil für das Überdruckventil genutzt werden. Dieser Dichtringträger besteht bei der Geberzylindern aus dem Stand der Technik aus einem Einpressteil, dass in eine entsprechende Bohrung im Kolben gepresst wird und dort in einen Presssitz kraftschlüssig befestigt wird. Zwischen dem Einpressteil und dem Kolbengrundkörper befindet sich die Primärdichtung des Geberzylinders, mittels derer der Druckraum gedichtet wird. Zur Bereitstellung eines Überdruckventils bietet es sich nun an, eine zentrale Bohrung in dem Einpressteil vorzunehmen und innerhalb dieser Bohrung eine Dichtfläche auszubilden. Komplementär zu der Dichtfläche wird dann ein Dichtelement vorgesehen, dass mittels einer Vorspannkraft gegen einen Anschlag oder den Dichtsitz gepresst wird und so im kraftfreien Zustand den Kolben abdichtet. Übersteigt der Druck im Kolben einen bestimmten Wert, so wird das Dichtelement gegen die Vorspannkraft von der Dichtfläche bzw. dem Anschlag wegbewegt, bis die Dichtwirkung aufgehoben wird und das Fluid durch das Einpressteil in den Kolben und von dort über vorzugsweise radiale Öffnungen in den Sekundärraum des Geberzylinders fließen kann, so dass der Druck im System abgebaut wird. Der Sekundär- bzw. Nachlaufraum des Kolbens steht dabei über eine Nachlauföffnung in Fluidverbindung mit einem Reservoir für das Hydraulikfluid, mit dem das hydraulische System befüllt ist, so dass das aus dem Druckraum des Zylinders austretende Fluid über den Nachlaufraum des Zylinders und die Nachlaufleitung in das Reservoir abfließen kann.

Es ist möglich, die Vorspannkraft mittels eines ersten Federelementes in Form einer Druckfeder, insbesondere einer Tellerfeder oder einer Schraubenfeder oder mittels eines zweiten Federelementes (14.2) in Form einer Zugfeder zu erzeugen.

Für die Ausbildung des Dichtelements, des Dichtsitzes und der Vorspannkraft ergeben sich unterschiedlich Möglichkeiten. So kann beispielsweise die Tellerfeder genutzt werden, um ein plattenförmiges Dichtelement gegen eine Dichtfläche zu pressen, ebenso sind kegelförmige Dichtelemente mit entsprechenden Kegeldichtungen oder Dichtelemente in einer Zylinderform mit außen liegender Dichtung möglich. Für die Vorspannkraft können unterschiedliche Federn, wie beispielsweise Tellerfedern, Elastomerfederung oder Schraubenfedern (als Zug- oder Druckfedern) zum Einsatz kommen. Dabei kann das Einpressteil als komplett funktionsfähiges Überlastventil ausgebildet werden, d. h. mit Abstützung für die Vorspannkraft, oder die Vorspannkraft am Kolbenkörper abgestützt werden, wobei in diesem Fall der Presssitz zwischen Einpresskörper und Kolbenkörper zur Aufnahme der Reaktionskraft auf die Vorspannkraft ausgebildet sein muss.

Weitere Merkmale, Merkmalskombinationen, Vorteile und Eigenschaften der vorliegenden Erfindung ergeben sich anhand der nachfolgenden Beschreibung und den Zeichnungen. Diese zeigen in:
Figur 1 Einen Geberzylinder aus dem Stand der Technik.
Figur 2 einen Einsatz mit einem Überlastventil in einem Geberzylinder in einer nicht erfindungsgemäßen Ausführung
Figur 3 eine alternative Ausführungsform für ein Überlastventil in einem Geberkolben in einer nicht erfindungsgemäßen Ausführung
Figur 4 wieder eine alternative Ausführungsform für ein Überlastventil in einem Geberzylinderkolben in einer nicht erfindungsgemäßen Ausführung
Figur 5 ein Detail der Ausführungsform in Figur 4
Figur 6 ein Einsatz und eine Feder zur Verwendung in dem Ausführungsbeispiel 4
Figur 7 eine weitere Ausführungsform eines Überlastventils in einem Geberzylinderkolben gemäß der vorliegenden Erfindung
Figur 8 ein Einsatz, ein Dichtelement, ein Halteelement, eine Feder sowie einen Dichtring für den Überlastventileinsatz in der Ausführungsform aus Figur 7
Figur 9 eine weitere Ausführungsform eines Geberzylinderkolbens mit einem Überlastventil gemäß der vorliegenden Erfindung
Figur 10 eine weitere Ausführungsform eines Überlastventils in einem Geberzylinderkolben gemäß der vorliegenden Erfindung
Figur 11 eine weitere Ausführung eines Geberzylinders mit einem Überlastventil und einem zweiten Federelement in Form einer Zugfeder,
Figur 12 eine vergrößerte Darstellung gem. Figur 11 von Überlastventil und zweitem Federelement, die im Geberzylinder angeordnet sind,
Figur 13 eine Prinzipdarstellung mit angedeuteter Wirkungsweise des Überlastventils in einer nicht erfindungsgemäßen Ausführung.

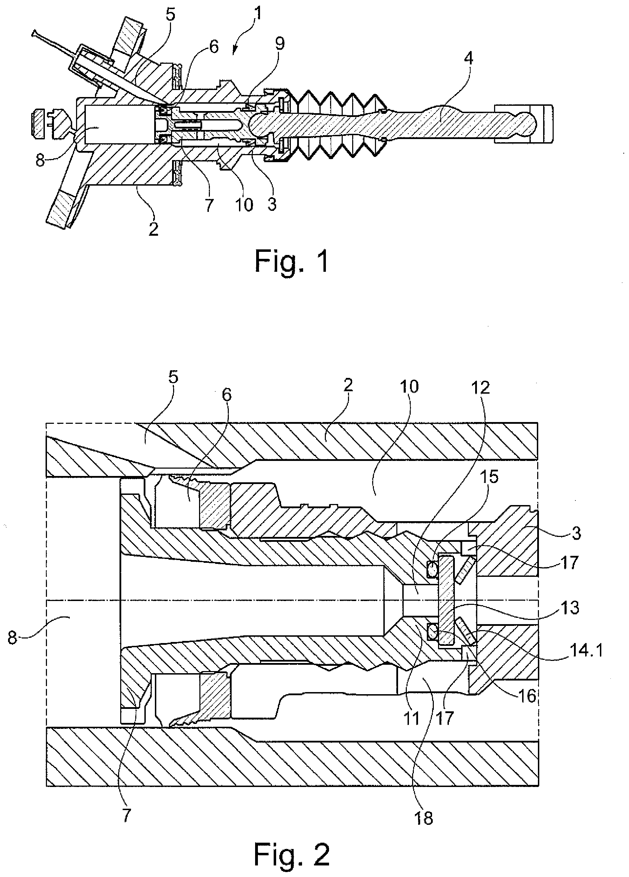

Figur 1 zeigt einen Geberzylinder 1 aus dem Stand der Technik. Der Geberzylinder 1 weist einen Geberzylindergehäuse 2, in dem axial verschieblich ein Kolben 3 geführt ist. Der Kolben 3 wird über die Kolbenstange 4 beispielsweise von einem Pedal (nicht gezeichnet) in axialer Richtung in den Zylinderinnenraum gedrückt. Eine Nachlaufleitung 5 ist mit einem Nachlaufbehälter (nicht gezeigt) verbunden. Der Kolben weist eine Kolbendichtung 6 auf, die mittels eines Kolbeneinsatzes 7 am Kolben befestigt ist und einen Druckraum 8 im Zylinder begrenzt. Eine sekundäre Kolbendichtung 9 begrenzt einen Nachlaufraum 10. Vom Druckraum 8 führt eine Druckleitung (nicht gezeichnet) zu einem Nehmerzylinder (nicht gezeichnet).

Figur 2 zeigt ein Ausschnitt aus einem Nehmerzylinder 1 der grundsätzlich analog zum Geberzylinder aus dem Stand der Technik in Figur 1 aufgebaut ist. Der Kolbeneinsatz 7 ist in dieser Ausführungsform zu einem Überlastventil 11 weitergebildet. Das Überlastventil 11 weist eine Bohrung 12 auf, die sich in axialer Richtung durch den Kolben erstreckt. Ein Dichtelement 13 wird von einem ersten Federelement 14.1 in der Art einer Druckfeder gegen eine Dichtfläche 15 gepresst. In der Dichtfläche 15 befindet sich eine Nut, in der ein Dichtring 16 zur sicheren Dichtung des Überlastventils im geschlossenen Zustand angeordnet ist.

Wenn nun im Druckraum 8 durch die Bewegung des Kolbens ein Druck aufgebaut wird, so entsteht eine Druckkraft auf das Dichtelement 13, die der Kraft des ersten Federelements 14.1 entgegengerichtet ist. Beim Überschreiten einer vorbestimmten Druckkraft auf das Dichtelement wird dieses von der Dichtfläche weg in Richtung Federelement bewegt, so dass eine Fluidverbindung zwischen Druckraum 8 und Nachlaufraum 10 über die Öffnungen 17 im Kolbeneinpressteil und 18 im Kolben selbst hergestellt wird. Da der Nachlaufraum 10 über die Nachlaufleitung 5 mit einem Nachlaufreservoir verbunden ist, herrscht in diesem Umgebungsdruck, so dass der Überdruck im Druckraum 8 entsprechenden abgebaut wird.

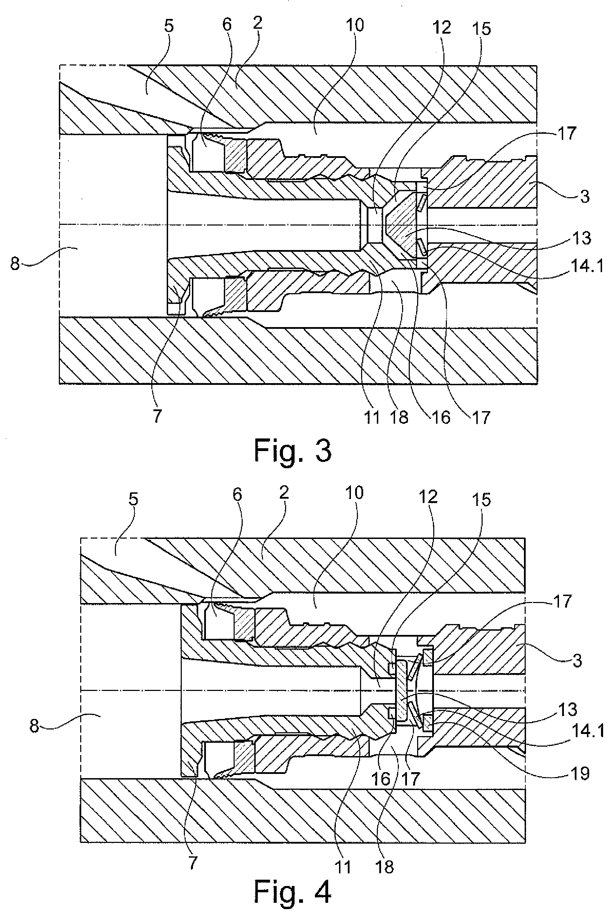

Figur 3 zeigt ein prinzipiell gleich aufgebautes Überdruckventil in einem Geberzylinderkolben mit dem Unterschied, dass das Dichtelement 13 nicht als Scheibe, wie in Figur 2, sondern als Kegel mit einem entsprechenden kegelförmigen Dichtring aufgebaut ist.

Auch Figur 4 zeigt ein Überlastventil ähnlich dem in Figur 2, mit dem Unterschied, dass das erste Federelement 14.1 an Anlagenelementen 19 des Einpressteils 7 gelagert ist, so dass ein geschlossener Kraftfluss im Einpressteil 7 realisiert wird, d. h. die Federkraft des ersten Federelements 14.1 stützt sich innerhalb des Einpressteils 7 ab, so dass die Vorspannkraft des Überlastventils nicht von der Einpressverbindung zwischen Einpressteil 7 und Kolben 3 aufgenommen werden muss, wie bei den Ausführungsformen in Figur 2 und 3, in denen sich das erste Federelement direkt am Kolben abstützt.

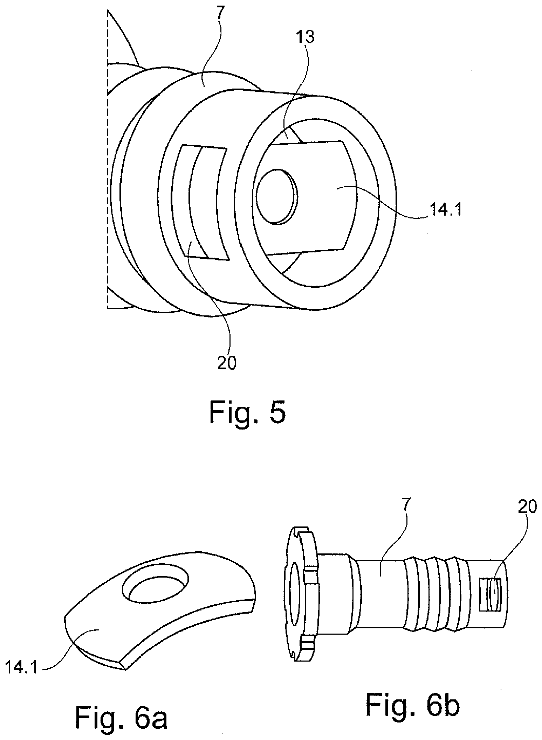

Figur 5 zeigt das Einpressteil 7 aus Figur 4 im Detail. Das erste Federelement 14.1 wird seitlich durch Öffnungen 20 in das Einpressteil 7 eingeschoben, nachdem das plattenförmige Dichtelement 13 gegen die Dichtfläche gepresst wurde. So kann bei einfacher Montage ein geschlossener Kraftfluss gewährleitstet werden.

Figur 6A und 6B zeigen das erste Federelement 14.1 und das Einpressteil 7 in einzelner Darstellung.

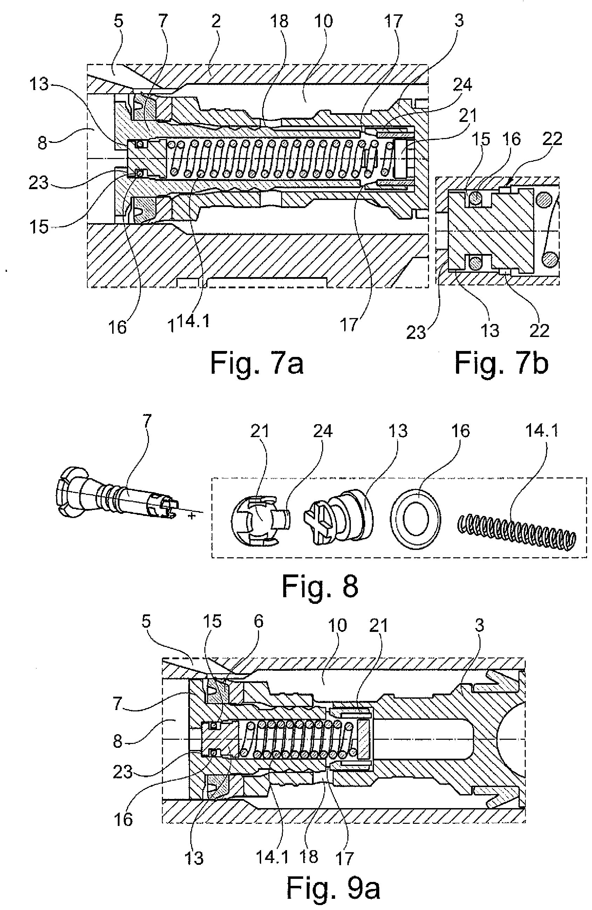

Figur 7 zeigt eine weitere Ausführungsform eines Überlastventils 1. Bei dieser Ausführungsform kommt im Unterschied zu den Ausführungsformen in den Figuren 2 bis 6 eine Schraubenfeder als erstes Federelement 14.1 (Druckfeder) zum Einsatz. Darüber hinaus ist bei der Ausführungsform in Figur 7 die Dichtfläche seitlich angeordnet, so dass die Anpressfläche des Dichtelements 13 und die Dichtfläche 15 bei der Ausführungsform in Figur 7A nicht gleich sind. Das Dichtelement 13 ist in Figur 7 im Wesentlichen zylinderförmig ausführt und weist eine umlaufende Nut auf, in der ein Dichtelement 13 in Form eines Dichtrings angeordnet ist.

Durch ddas erste Federelement 14.1 wird das Dichtelement 13 an die Anschlagfläche 23 gepresst, der Dichtring (Dichtelement 13) liegt an der Dichtfläche 15 an und sorgt so für eine Abdichtung im geschlossenen Zustand. Prinzipiell ist auch eine umgekehrte Anordnung, d. h. die Dichtung am Einpressteil und Dichtfläche am Dichtelement möglich. Wenn nun der Druck im Druckraum des Geberzylinders steigt und die Druckkraft auf das Dichtelement 13 die Federkraft des ersten Federelementes 14.1 übersteigt, bewegt sich das Dichtelement 13 zurück, bis der Dichtring über die Nuten 22 auf der Innenwand des Einpressteils 7 geschoben wird, wodurch eine Fluidverbindung zwischen Raum 8 und Nachlaufraum 10 entsteht. In Figur 7B sind die Nuten 22 in der Detaildarstellung deutlich zu erkennen. Über die Öffnungen 17 und 18 fließt dann, wie bei den vorhergehenden Ausführungsformen, das Hydraulikfluid in den Nachlaufraum ab. Am Ende des Einpressteils 7 befindet sich ein Verschlusselement 21, das als Anlage für das erste Federelement 14.1 dient und mittels Rasthaken 24 in Öffnungen 17 des Einpressteils 7 festgelegt ist. Da das Halterungselement 21 vom Umfang her passgenau mit der Bohrung im Inneren des Kolbens 4 ausgeführt ist, kann nach dem Einpressen des Einpressteils 7 in den Kolben 3 die Rastverbindung nicht mehr gelöst werden, da die Rasthaken 24 durch die Innenwandung des Kolbens 3 an einer Bewegung nach außen gehindert werden.

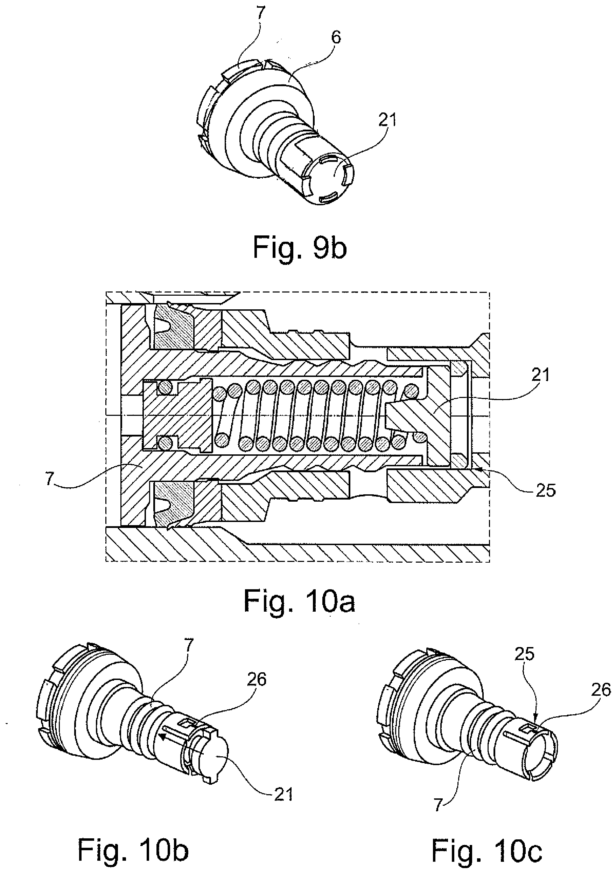

Figur 9 zeigt eine ähnliche Ausführungsform wie Figur 8, bei der das Einpressteil kompakter ausgeführt ist.

Figur 10 zeigt ebenfalls eine ähnliche Ausführungsform zu den in den Figuren 7 bis 9 dargestellten Varianten mit einem abgewandten Verschlusselement 21, das in Clipsöffnungen 26 am Einpressteil 7 eingepresst wird. Diese Clipsöffnungen 26 weisen Quetschnoppen 25 auf, die nach dem Einpressen in den Kolben zur Anlage an der Kolbeninnenseite gelangen und so ebenfalls ein nachträgliches Öffnen und somit ein Herausgleiten des Verschlusselementes 21 zuverlässig verhindern.

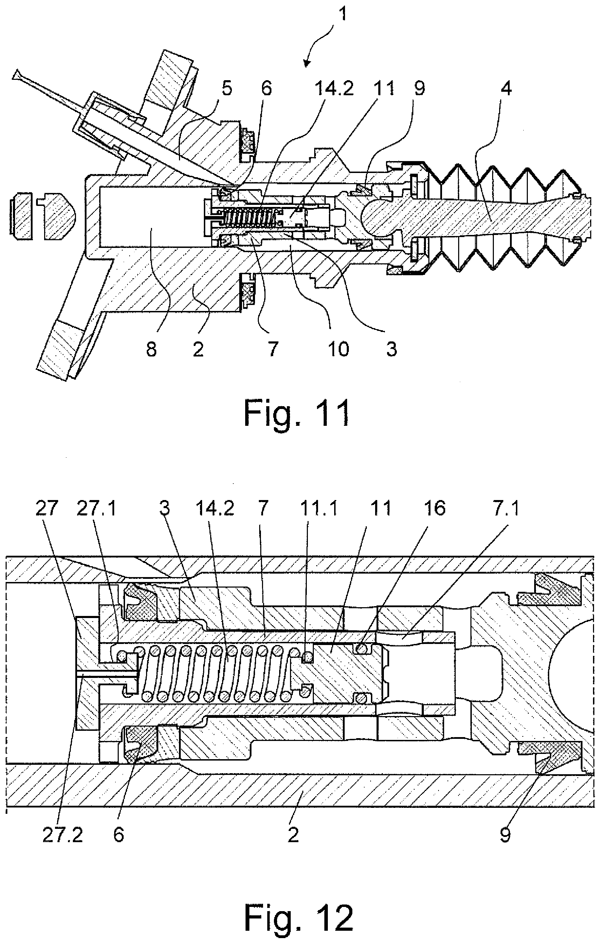

Anstelle der vorgenannt beschriebenen Varianten ist es auch möglich, ein zweites Federelement 14.2 in Form einer Zugfeder einzusetzen, wie es in den Figuren 11 bis 13 dargestellt ist.

Figur 11 zeigt dabei eine weitere Ausführung eines Geberzylinders 1 mit einem Überlastventil 11 und einem zweiten Federelement 14.2 in Form einer Zugfeder. Auch hier ist das Überlastventil 11 im Kolben 3 angeordnet. Der Geberzylinder 1 weist ebenfalls ein Geberzylindergehäuse 2 auf, in dem axial verschieblich der Kolben 3 geführt und über die Kolbenstange 4 betätigbar ist. Die Nachlaufleitung 5 ist mit dem Nachlaufbehälter (nicht dargestellt) verbunden. Der Kolben 3 ist auch hier, wie im Stand der Technik nach Figur 1 mit einer Kolbendichtung 6 versehen, die am Kolben 3 befestigt ist und den Druckraum 8 im Geberzylindergehäuse 2 begrenzt. Die sekundäre Kolbendichtung 9 begrenzt den Nachlaufraum 10.

Aus der in Figur 12 vergrößerten Darstellung von Überlastventil 11 und zweitem Federelement 14.2, die im Geberzylinder 1 angeordnet sind, wird deutlich, dass das zweite Federelement, 14.2 in Form der Zugfeder an einem Ende an einem Federhaltering 27 und an dem anderen Ende an dem Überlastventil 11 über einen Formschluss (hier über endsetige Windungen, die am Federhaltering 27 und am Überlastventil 11 eingreifen, angeordnet ist, wozu das Überlastventil eine Nut 11.1 und der Federhaltering eine Nut 27.1 aufweisen, in welchen das entsprechende Ende des zweiten Federelementes 14.2 sitzt. Das Überlastventil 11 ist hier radial mittels eines Dichtrings 16 gegenüber dem Einpressteil 7, welches im Kolben 3 angeordnet ist, abgedichtet. Der Kolben ist über die Kolbendichtungen 6 und 9 gegenüber dem Geberzylindergehäuse 2 abgedichtet. Der Federhaltering 27 ist so konstruiert, dass das Fluid (hier nicht dargestellt) bis zum Überlastventil 11 gelangen kann. Dazu weist hier zum Beispiel der Federhaltering 27 eine zentrische Bohrung 27.2.

Die Funktionsweise bei dem Überlastventil 11 mit zweitem Federelement 14.2 in Form der Zugfeder ist die gleiche wie bei dem Überdruckventil/Ventil 11 mit ersten Federelement 14.1 in Form einer Druckfeder. Wird die resultierende Kraft auf das Überlastventil durch den Druck größer als die Vorlast des zweiten Federelementes, bewegt sich das Überlastventil 11 in den Darstellungen gem. Figur 11 und 12 nach rechts. Dort befindet sich eine Quer-Bohrung 7.1 (oder eine Nut) im Einpressteil 7. Kommt der Dichtring 16 über diese Bohrung 7.1 ist das Überlastventil 11 undicht und nicht dargestellte Flüssigkeit gelangt von Primärseite in die Sekundärseite, wodurch der Druck auf Primärseite reduziert wird.

Alternativ ist es auch möglich, das Überlastventil 11 axial abzudichten.

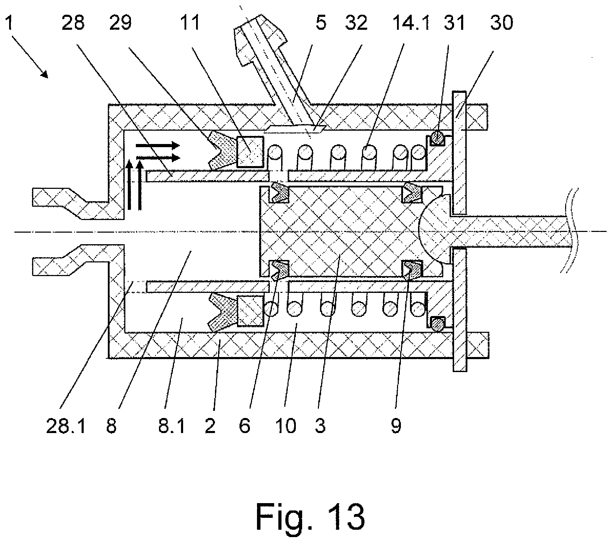

Figur 13 zeigt eine Prinzipdarstellung mit angedeuteter Wirkungsweise eines Überlastventils 11, welches in einem Paralleldruckraum 8.1 angeordnet ist, wobei der Paralleldruckraum 8.1 den Druckraum 8 mit dem Nachlaufraum 10 verbindet. Dazu ist zwischen Druckraum 8 und Paralleldruckraum 8.1 eine in Richtung zur Längsachse des Geberzylinders 1 erstreckende Zwischenhülse 28 angeordnet, durch welche der Druckraum 8 von dem Paralleldruckraum 8.1 abgegrenzt ist. In dem Paralleldruckraum 8.1 ist das entgegen der Vorspannkraft eines ersten Federelements 14.1 (hier Druckfeder) betätigbare Überlastventil 11 angeordnet und radial gegenüber dem Geberzylindergehäuse 2 und der Zwischenhülse 28 und axial über eine Überlastventildichtung 29 abgedichtet.

Der Kolben 3 ist über eine Kolbendichtung 6 (Primärdichtung) und eine Kolbendichtung 9 (Sekundärdichtung) abgedichtet. Die Hülse 28 weist einen Durchbruch 28.1 auf, damit Fluid, angedeutet durch die Pfeile, aus dem Druckraum 8 in den Paralleldruckraum 8.1 fließen kann. Die Hülse 28 wird hier beispielsweise über eine Halteklammer 30 am Geberzylindergehäuse 2 befestigt. Und weist einen radial nach außen gerichteten Bund 28.2 auf, der radial zum Geberzylindergehäuse 2 über eine Dichtung 31 (hier O-Ring) abdichtet. Die erste Feder 14.1 ist in Form einer Schraubenfeder ausgebildet und liegt mit einem Ende am Bund 28.2 und mit dem anderen Ende an dem Überlastventil 11 (hier ein ringförmiger Ventilkolben) unter Vorspannung an.
Das Geberzylindergehäuse 2 weist radial innen in dem Bereich, in den die Nachlaufleitung 5 mündet, eine Nut 32 auf. Wenn die Ventildichtung 29 über diese Nut 32 gelangt ist diese undicht und das Überlastventil daher geöffnet und die Verbindung zum Nachlaufraum 10 hergestellt.

Die Funktionsweise des Überlastventils 11 ist die Gleiche (durch eine Vorlast geregelt) wie bei den vorgenannt beschriebenen Ausführungsbeispielen.

Das Überlastventil kann alternativ auch mit einer Zugfeder erstellt werden.

### Bezugszeichenliste

- 1: Geberzylinder
- 2: Geberzylindergehäuse
- 3: Kolben
- 4: Kolbenstange
- 5: Nachlaufleitung
- 6: Kolbendichtung
- 7: Kolbeneinsatz / Einpressteil
- 7.1: Bohrung
- 8: Druckraum
- 8.1: Paralleldruckraum
- 9: Kolbendichtung
- 10: Nachlaufraum
- 11: Überlastventil
- 11.1: Nut
- 12: Bohrung
- 13: Dichtelement
- 14.1: erstes Federelement in Form einer Druckfeder
- 14.2: zweites Federelement in Form einer Zugfeder
- 15: Dichtfläche
- 16: Dichtring
- 17: Öffnungen
- 20: Öffnungen
- 21: Verschlussteil
- 22: Nuten
- 23: Anschlagfläche
- 24: Rasthaken
- 25: Quetschnoppen
- 26: Clipsöffnungen
- 27: Federhaltering
- 27.1: Nut
- 27.2: Bohrung
- 28: Zwischenhülse
- 28.1: Durchbruch
- 28.2: Bund
- 29: Ventildichtung
- 30: Halteklammer
- 31: Dichtung
- 32: Nut

## Patentansprüche

1. Geberzylinder (1) für ein hydraulisches System, insbesondere ein Kupplungsausrücksystem, mit einem Gehäuse (2), das einen Anschluss für eine Nachlaufleitung (5) aufweist, einem Kolben (3) mit einer Kolbendichtung (6), der im Gehäuse axial verschieblich gelagert ist und einen Druckraum (8) begrenzt, und einer zweiten Dichtung (9), die im Gehäuse (2) oder am Kolben (3) auf der dem Druckraum (8) abgewandten Seite angeordnet ist und einen Nachlaufraum (10) begrenzt, wobei in dem Geberzylinder (1) ein Überlastventil (11) angeordnet ist, das bei Überschreiten eines vorbestimmten Drucks eine Fluidverbindung zwischen dem Druckraum (8) und dem Nachlaufraum (10) öffnet und das Überlastventil (11) ein Dichtelement (13) aufweist, das mittels einer Vorspannkraft gegen eine Dichtfläche (15) gepresst wird, **dadurch gekennzeichnet, dass** der Kolben (3) aus einem Kolbenkörper (3) und einem Einpressteil (7) gebildet ist und das Dichtelement (13) zumindest in Teilbereichen eine Kreiszylinderform aufweist und in einer kreiszylindrischen Bohrung (12) im Kolben (3) oder im Einpressteil (7) so geführt ist, das ein Spalt zwischen dem Außenumfang des Dichtelements (13) und der Innenseite der Bohrung (12) vorhanden ist, und ein Dichtring (16) in dem Spalt zwischen dem Dichtelement (13) und der Bohrung (12) angeordnet ist, wobei bei einer Bewegung des Dichtelements (13) gegen die Vorspannkraft das Dichtelement (13) aus dem Dichtring (16) oder das Dichtelement (13) mit dem Dichtring (16) aus der Bohrung (12) geführt wird, bis eine Fluidverbindung zwischen Druckraum (8) und Nachlaufraum (10) entsteht.

2. Geberzylinder (1) nach Anspruch 1, **dadurch gekennzeichnet, dass** die Vorspannkraft mittels eines ersten Federelements (14.1), in Form einer Druckfeder, insbesondere einer Tellerfeder oder einer Schraubenfeder, oder mittels eines zweiten Federelementes (14.2) in Form einer Zugfeder erzeugt wird.

3. Geberzylinder (1) nach einem der Ansprüche 1 oder 2, **dadurch gekennzeichnet, dass** das Überlastventil eine im wesentlichen axiale Bohrung im Kolben (3) aufweist, wobei ein Ende der Bohrung zum Druckraum (8) geöffnet ist und am anderen Ende die Dichtfläche (15) oder der Anschlag (23) ausgebildet ist, an die das Dichtelement (13) gepresst wird, und auf der von dem Druckraum (8) abgewandten Seite des Dichtelements (13) eine oder mehrere Bohrungen (17,18) zur Bildung einer Verbindung zum Nachlaufraum (10) zur Kolbenaußenseite geführt sind , wobei der Kolben eine axiale Öffnung aufweist, in die das Einpressteil (7) eingepresst wird, wobei in dem Einpressteil (7) die axiale Bohrung (12) zum Druckraum (8) gebildet ist und in einem dem Druckraum (8) abgewandten Bereich des Einpressteils (7) die Dichtfläche (15) ausgebildet ist.

4. Geberzylinder (1) nach einem der Ansprüche 2 oder 3, **dadurch gekennzeichnet, dass** das erste Federelement (14.1) an dem Kolbenkörper (3) oder an dem Einpressteil (7) einerseits und an dem Dichtelement (13) andererseits abgestützt ist oder dass das zweite Federelement (14.2) endseitig mit dem Überlastventil und einem Federhaltering verbunden ist.

5. Geberzylinder (1) nach einem der Ansprüche 1 bis 4, **dadurch gekennzeichnet, dass** der Dichtring (16) zwischen dem Dichtelement (13) und der Dichtfläche (15) in Form einer Kegeldichtung ausgebildet ist.

6. Geberzylinder (1) nach einem der Ansprüche 2 bis 5, **dadurch gekennzeichnet, dass** an der dem Druckraum (8) abgewandten Seite des Einpressteils (7) ein Verschlussteil (21) angeordnet ist, mittels dessen der Innenraum des Einpressteils (7) nach Einbringen des Dichtelements (13) und der des ersten Federelements (14.1) verschlossen wird.

## Claims

1. Master cylinder (1) for a hydraulic system, in particular a clutch release system, having a housing (2) which has a connector for a follow-up line (5), a piston (3) with a piston seal (6), which piston (3) is mounted axially displaceably in the housing and delimits a pressure space (8), and a second seal (9) which is arranged in the housing (2) or on the piston (3) on the side which faces away from the pressure space (8), and delimits a follow-up space (10), an overload valve (11) being arranged in the master cylinder (1), which overload valve (11) opens a fluidic connection between the pressure space (8) and the follow-up space (10) if a predefined pressure is exceeded, and the overload valve (11) having a sealing element (13) which is pressed against a sealing face (15) by means of a prestressing force, **characterized in that** the piston (3) is formed from a piston body (3) and a press-in part (7), and the sealing element (13) has a circular-cylindrical form at least in part regions and is guided in a circular-cylindrical bore (12) in the piston (3) or in the press-in part (7) in such a way that there is a gap between the outer circumference of the sealing element (13) and the inner side of the bore (12), and a sealing ring (16) is arranged in the gap between the sealing element (13) and the bore (12), the sealing element (13) being guided out of the sealing ring (16) or the sealing element (13) being guided with the sealing ring (16) out of the bore (12) in the case of a movement of the sealing element (13) counter to the prestressing force, until a fluidic connection is produced between the pressure space (8) and the follow-up space (10).

2. Master cylinder (1) according to Claim 1, **characterized in that** the prestressing force is generated by means of a first spring element (14.1), in the form of a compression spring, in particular a cup spring or a helical spring, or by means of a second spring element (14.2) in the form of a tension spring.

3. Master cylinder (1) according to either of Claims 1 and 2, **characterized in that** the overload valve has a substantially axial bore in the piston (3), one end of the bore being open to the pressure space (8), and the sealing face (15) or the stop (23), against which the sealing element (13) is pressed, being configured at the other end, and one or more bores (17, 18) for forming a connection to the follow-up space (10) being routed to the piston outer side on that side of the sealing element (13) which faces away from the pressure space (8), the piston having an axial opening, into which the press-in part (7) is pressed, the axial bore (12) being formed in the press-in part (7) to the pressure space (8), and the sealing face (15) being configured in a region of the press-in part (7) which faces away from the pressure space (8).

4. Master cylinder (1) according to either of Claims 2 and 3, **characterized in that** the first spring element (14.1) is supported on one side on the piston body (3) or on the press-in part (7) and on the other side on the sealing element (13), or **in that** the second spring element (14.2) is connected on the end side to the overload valve and a spring holding ring.

5. Master cylinder (1) according to one of Claims 1 to 4, **characterized in that** the sealing ring (16) is configured between the sealing element (13) and the sealing face (15) in the form of a conical seal.

6. Master cylinder (1) according to one of Claims 2 to 5, **characterized in that** a closure part (21) is arranged on that side of the press-in part (7) which faces away from the pressure space (8), by means of which closure part (21) the interior space of the press-in part (7) is closed after the introduction of the sealing element (13) and the first spring element (14.1).

## Revendications

1. Maître-cylindre (1) pour un système hydraulique, en particulier un système de débrayage d'un embrayage, comprenant un boîtier (2) qui présente un raccord pour une conduite d'alimentation (5), un piston (3) avec un joint de piston (6) qui est supporté de manière déplaçable axialement dans le boîtier et qui délimite un espace de pression (8), et un deuxième joint (9) qui est disposé dans le boîtier (2) ou au niveau du piston (3) du côté opposé à l'espace de pression (8) et qui délimite un espace d'alimentation (10), une soupape de surcharge (11) étant disposée dans le maître-cylindre (1), laquelle, en cas de dépassement d'une pression prédéterminée, ouvre une liaison fluidique entre l'espace de pression (8) et l'espace d'alimentation (10) et la soupape de surcharge (11) présentant un élément d'étanchéité (13) qui est pressé au moyen d'une force de précontrainte contre une surface d'étanchéité (15), **caractérisé en ce que** le piston (3) est formé d'un corps de piston (3) et d'une pièce de pressage (7) et l'élément d'étanchéité (13) présente, au moins dans des régions partielles, une forme cylindrique circulaire et est guidé dans un alésage cylindrique circulaire (12) dans le piston (3) ou dans la pièce de pressage (7) de telle sorte qu'il existe une fente entre la périphérie extérieure de l'élément d'étanchéité (13) et le côté intérieur de l'alésage (12), et une bague d'étanchéité (16) étant disposée dans la fente entre l'élément d'étanchéité (13) et l'alésage (12), l'élément d'étanchéité (13), lors d'un déplacement de l'élément d'étanchéité (13) à l'encontre de la force de précontrainte, étant guidé hors de la bague d'étanchéité (16), ou l'élément d'étanchéité (13) avec la bague d'étanchéité (16) étant guidé hors de l'alésage (12), jusqu'à ce qu'une liaison fluidique soit établie entre l'espace de pression (8) et l'espace d'alimentation (10).

2. Maître-cylindre (1) selon la revendication 1, **caractérisé en ce que** la force de précontrainte est générée au moyen d'un premier élément de ressort (14.1) sous la forme d'un ressort de compression, en particulier d'un ressort à coupelle ou d'un ressort à boudin, ou au moyen d'un deuxième élément de ressort (14.2) sous la forme d'un ressort de traction.

3. Maître-cylindre (1) selon l'une quelconque des revendications 1 ou 2, **caractérisé en ce que** la soupape de surcharge présente un alésage essentiellement axial dans le piston (3), une extrémité de l'alésage étant ouverte vers l'espace de pression (8) et à l'autre extrémité étant réalisée la surface d'étanchéité (15) ou la butée (23) contre laquelle l'élément d'étanchéité (13) est pressé, et du côté de l'élément d'étanchéité (13) opposé à l'espace de pression (8), un ou plusieurs alésages (17, 18) pour la formation d'une liaison jusqu'à l'espace d'alimentation (10) étant guidés vers le côté extérieur du piston, le piston présentant une ouverture axiale dans laquelle la pièce de pressage est enfoncée, l'alésage axial (12) étant formé dans la pièce de pressage (7) vers l'espace de pression (8) et la surface d'étanchéité (15) étant réalisée dans une région de la pièce de pressage (7) opposée à l'espace de pression (8).

4. Maître-cylindre (1) selon l'une quelconque des revendications 2 ou 3, **caractérisé en ce que** le premier élément de ressort (14.1) est supporté contre le corps de piston (3) ou contre la pièce de pressage (7) d'une part et contre l'élément d'étanchéité (13) d'autre part ou **en ce que** le deuxième élément de ressort (14.2) est connecté du côté de l'extrémité à la soupape de surcharge et à une bague de retenue de ressort.

5. Maître-cylindre (1) selon l'une quelconque des revendications 1 à 4, **caractérisé en ce que** la bague d'étanchéité (16) est réalisée entre l'élément d'étanchéité (13) et la surface d'étanchéité (15) sous la forme d'un joint conique.

6. Maître-cylindre (1) selon l'une quelconque des revendications 2 à 5, **caractérisé en ce qu'**une pièce de fermeture (21) est disposée au niveau du côté de la pièce de pressage (7) opposé à l'espace de pression (8), au moyen de laquelle l'espace interne de la pièce de pressage (7) est fermé après l'introduction de l'élément d'étanchéité (13) et du premier élément de ressort (14.1).
